# EUROPÄISCHE PATENTANMELDUNG

(11) **EP 1 652 604 A1**
(43) Veröffentlichungstag der Anmeldung: **03.05.2006**
(21) Anmeldenummer: 04025673.7
(22) Anmeldetag: 28.10.2004
(51) Int. Cl.: B22C 23/00, B22D 17/22, B29C 33/42, B29C 45/37

(54) **Kennzeichnungsstempel**

(71) Anmelder: Opitz GmbH, 63741 Aschaffenburg (DE)
(72) Erfinder: Opitz, Wolfgang, 63741 Aschaffenburg (DE)
(74) Vertreter: TBK-Patent

(57) **Zusammenfassung**

Offenbart wird ein Kennzeichnungsstempel, der in eine Form zur Metall- oder Kunststoffverarbeitung einsetzbar ist und einen Grundkörper (101) zur Aufnahme eines Einsatzes (7) in einer Ausnehmung (5) des Grundkörpers (1) aufweist. Eine stirnseitige Fläche (6) des Grundkörpers (101) bildet zusammen mit einer stirnseitigen Fläche des Einsatzes (7) eine durch gegenseitiges Verdrehen der beiden stirnseitigen Flächen verstellbare Stempelfläche. Der Grundkörper (101) verfügt über einen Außengewindeabschnitt (21), über den der Grundkörper in einen Innengewindeabschnitt der Form einschraubbar ist.

## Beschreibung

Die Erfindung bezieht sich auf einen in eine Form zur Metall- oder Kunststoffverarbeitung einsetzbaren Kennzeichnungsstempel.

Ein bekannter Kennzeichnungsstempel ist in der deutschen Patentschrift DE 44 15 583 offenbart. Der Kennzeichnungsstempel ist im Wesentlichen aus einem Grundkörper mit einer Ausnehmung zur Aufnahme eines Einsatzes und einer Feder zum Vorspannen des Einsatzes aufgebaut. Für den Einbau des Kennzeichnungsstempel in eine Form ist an der der Ausnehmung entgegengesetzten Seite des Stempels eine Durchgangsbohrung vorgesehen. Der Grundkörper wird von der Forminnenseite in die Bohrung der Form eingesetzt und von der Formaußenseite über einen Gewindebolzen mit einer Gewindebohrung des Kennzeichnungsstempels verschraubt. Eine solche Befestigungsart erfordert jedoch eine ausreichende Zugänglichkeit sowohl von der Forminnenseite als auch von der Formaußenseite her.

Es ist die Aufgabe der Erfindung die Montagefähigkeit eines Kennzeichnungsstempels in eine Form zur Metall- oder Kunststoffverarbeitung zu verbessern.

Die genannte Aufgabe wird durch einen Kennzeichnungsstempel mit den Merkmalen des Schutzanspruchs 1 gelöst. Bevorzugte Ausführungsbeispiele des Kennzeichnungsstempels sind in den abhängigen Schutzansprüchen dargelegt.

Der erfindungsgemäße Kennzeichnungsstempel, der in eine Form zur Metall- oder Kunststoffverarbeitung einsetzbar ist, hat einen Grundkörper zur Aufnahme eines Einsatzes in einer Ausnehmung des Grundkörpers, wobei eine stirnseitige Fläche des Grundkörpers zusammen mit einer stirnseitigen Fläche des Einsatzes eine durch gegenseitiges Verdrehen der beiden stirnseitigen Flächen verstellbare Stempelfläche bilden. Erfindungsgemäß verfügt der Grundkörper über einen Außengewindeabschnitt, über den der Grundkörper in einen Innengewindeabschnitt der Form einschraubbar ist. Somit kann der Grundkörper auf einfache Weise direkt in eine in der Form ausgebildete Gewindebohrung eingeschraubt werden ohne dass die Form von ihrer Außenseite zugänglich sein muss.

Gemäß einer vorteilhaften Weiterbildung des Kennzeichnungsstempels befindet sich der Außengewindeabschnitt direkt an dem Grundkörper.

Alternativ kann sich der Außengewindeabschnitt an einem mit dem Grundkörper verbundenen Gewindebolzen befinden. Dabei kann der Gewindebolzen in eine Bohrung des Grundkörpers eingeschraubt sein. Somit kann ein schon bekannter Grundkörper mit Gewindebohrung verwendet werden und um das Außengewinde des in die Gewindebohrung eingeschraubten und von dem Grundkörper vorstehenden Gewindebolzen erweitert werden, um so die genannte Aufgabe zu lösen. Der Gewindebolzen kann aber auch mit dem Grundkörper zusammen aus einem Rohling gefertigt sein. Dies verringert die Anzahl der Bauteile und der Montageschritte beim Einbau des Grundkörpers in die Form.

Der Grundkörper kann auch zwei Abschnitte mit unterschiedlichen Durchmessern haben, so dass im Bereich zwischen diesen Abschnitten ein sich radial erstreckender Anschlag ausgebildet ist. Dabei kann der Außengewindeabschnitt an dem Abschnitt des Grundkörpers mit größeren Durchmesser ausgebildet sein oder kann an dem Abschnitt des Grundkörpers mit kleinerem Durchmesser ausgebildet sein. Bei dieser Ausführungsform ist ein direktes Einschrauben des Grundkörpers in die Form von ihrer Außenseite her möglich. Unter der Vorraussetzung, dass der Einsatz schon im Grundkörper befestigt ist, ist hierbei auf vorteilhafte Weise eine Zugänglichkeit von der Forminnenseite her nicht nötig.

Außerdem kann in der Ausnehmung des Grundkörpers ein Aufnahmebereich zur Aufnahme eines Drehwerkzeugs vorgesehen sein. Dieser Aufnahmebereich erstreckt sich bevorzugter Weise axial. Dabei kann der Aufnahmebereich ein Sechskantbereich zur Aufnahme eines Sechskantschlüssels oder ein Schlitz oder Kreuzschlitz zur Aufnahme eines Schraubendrehers sein. Somit wird ein einfaches Einschrauben des Grundkörpers in die Form mit gängigen Werkzeugen möglich.

Im Folgenden wird die Erfindung anhand von Beispielen und mit Bezug auf die beiliegenden schematischen Zeichnungen näher erläutert, wobei
Fig. 1 einen in einer Form montierten Kennzeichnungsstempel einer bekannten Bauart zeigt;
Fig. 2 die Stempelfläche des Stempels aus Fig. 1 zeigt;
Fig. 3 einen Grundkörper eines Kennzeichnungsstempel gemäß einem ersten Ausführungsbeispiel der Erfindung zeigt;
Fig. 4 einen Grundkörper eines Kennzeichnungsstempel gemäß einem zweiten Ausführungsbeispiel der Erfindung zeigt;
Fig. 5 einen Grundkörper eines Kennzeichnungsstempel gemäß einem dritten Ausführungsbeispiel der Erfindung zeigt;
Fig. 6 einen Grundkörper eines Kennzeichnungsstempel gemäß einem vierten Ausführungsbeispiel der Erfindung zeigt;
Fig. 7 einen Bereich einer Form zur Metall- oder Kunststoffverarbeitung zum Montieren eines Kennzeichnungsstempels gemäß dem ersten Ausführungsbeispiel zeigt,
Fig. 8 einen Bereich einer Form zur Metall- oder Kunststoffverarbeitung zum Montieren eines Kennzeichnungsstempels gemäß dem zweiten und dritten Ausführungsbeispiel zeigt,
Fig. 9 einen Bereich einer Form zur Metall- oder Kunststoffverarbeitung zum Montieren eines Kennzeichnungsstempels gemäß dem vierten Ausführungsbeispiel zeigt.

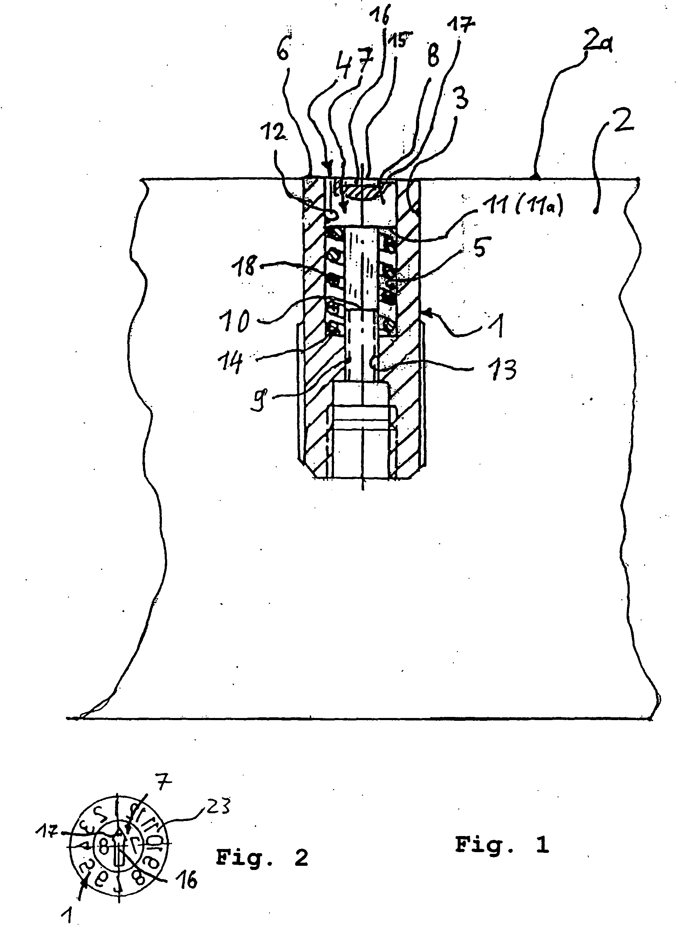

Anhand von Fig. 1 wird nun der allgemeine Aufbau eines Kennzeichnungsstempels zur Montage in eine Form 2 zur Metall- oder Kunststoffverarbeitung erläutert. Der Kennzeichnungsstempel verfügt über einen Grundkörper 1, in dem eine zylindrische Ausnehmung 5 ausgebildet ist, wodurch am Grundkörper 1 auf seiner dem Forminneren zugewandten Stirnseite eine ebene Ringfläche 6 entsteht. Die ebene Ringfläche 6 ist mit eingravierten Markierungen 23, wie beispielsweise mit einer Skala, versehen (siehe Fig. 2).

In der Ausnehmung 5 ist ein Einsatz 7 angeordnet, der als eine Schraube ausgebildet ist, und im Wesentlichen aus einem zylindrischen Kopfabschnitt 8 und einem mit einem Gewinde 9 versehenen zylindrischen Schaftabschnitt 10 besteht. Der Schaftabschnitt 10 ist im Durchmesser kleiner ausgebildet als der Kopfabschnitt 8, so dass zwischen Kopfabschnitt 8 und Schaftabschnitt 10 eine Radialstufe 11 ausgebildet ist. Durch die Radialstufe 11 entsteht am Einsatz 7 eine ringförmige axiale Anliegefläche 11a. Der Einsatz 7 hat eine vordere, dem Forminneren zugewandte kreisrunde ebene Stirnfläche 15, die mit einem Schlitz 16 und einer eingravierten Pfeilspitze 17 versehen ist (siehe auch Fig. 2).

Die im Grundkörper 1 ausgebildete Ausnehmung 5 hat einen ersten dem Forminneren zugewandten Bohrungsabschnitt 12 mit einem Durchmesser, der etwas größer als der Außendurchmesser des Kopfabschnitts 8 ist, so dass der Kopfabschnitt 8 im ersten Bohrungsabschnitt 12 der Ausnehmung 5 versenkbar ist. Der mittlere Abschnitt der Ausnehmung 5 hat eine Gewindebohrung 13 mit kleinerem Durchmesser als der Durchmesser des ersten Bohrungsabschnitts 12, so dass eine Radialstufe 14 ausgebildet wird. Das Gewinde der Gewindebohrung 13 passt mit dem am Einsatz 7 ausgebildeten Gewinde 9 zusammen.

Zwischen der ringförmigen axialen Anliegefläche 11a des Einsatzes 7 und der Radialstufe 14 des Grundkörpers 1 ist eine spiralförmige Druckfeder 18 vorgesehen. Die Druckfeder 18 ist demnach im ersten Bohrungsabschnitt 12 untergebracht, so dass sie den Schaftabschnitt 10 umgibt.

Beim Zusammenbau des Kennzeichnungsstempels wird zunächst die Druckfeder 18 in den ersten Bohrungsabschnitt 12 eingesetzt. Dann wird der Einsatz 7 mit seinem schaftseitigen Ende in die zylindrische Ausnehmung 5 eingesetzt und das am Schaftabschnitt 10 ausgebildete Gewinde 9 mit dem in der Gewindebohrung 13 ausgebildeten Gewinde verschraubt, bis die vordere Stirnfläche 15 des Einsatzes 7 mit der Ringfläche 6 des Grundkörpers 1 bündig abschliesst. Dabei wird die Feder 18 komprimiert und bringt eine Reibungskraft zwischen dem Einsatz 2 und dem Grundkörper 1 auf, so dass der Einsatz 7 in einer bestimmten vorgewählten Drehposition gegenüber dem Grundkörper 1 haltbar ist.

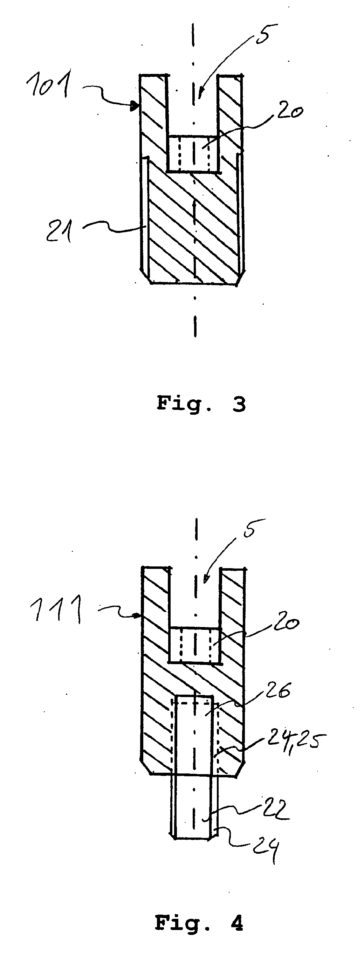

Wie in Fig. 3 dargestellt ist, verfügt der Grundkörper 101 gemäß einem ersten erfindungsgemäßen Ausführungsbeispiel an seiner Außenumfangsseite über ein Gewinde 21 und im Inneren der Ausnehmung 5 über einen Sechskant 20 zur Aufnahme eines Sechskantschlüssels. Dabei bildet der Sechskant 20 außerdem die Radialstufe 14 als Anschlag für die einzusetzende Feder. Das Gewinde 21 passt zum Innengewinde 31 einer Bohrung 32 in der Form 2, so dass der Grundkörper 101 einfach unter Zuhilfenahme eines Sechskantschlüssels von der Forminnenseite her in die Form 2 eingeschraubt werden kann. Anschließend können die Feder 18 und der Einsatz 7 ebenfalls von der Forminnenseite her im Grundkörper 101 montiert werden, so dass eine Zugänglichkeit von der Formaußenseite her nicht notwendig ist. Dies ist zum Beispiel nötig, wenn sich unterhalb des Stempels Konstruktionselemente wie bewegliche Bauteile oder Bohrungen befinden. Außerdem muss die Form nur von einer Seite her bearbeitet werden um die Stempelaufnahme (Bohrung 32) einzubringen.

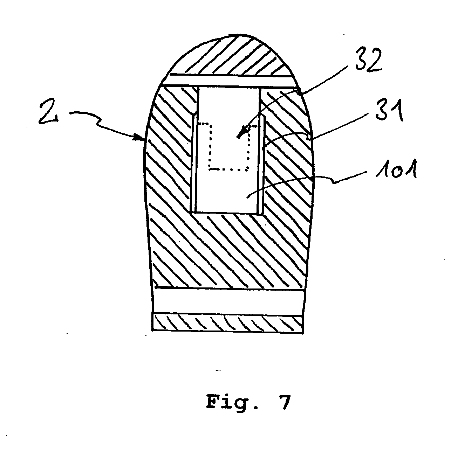

Fig. 4 zeigt ein zweits Ausführungsbeispiel des Grundkörpers 1. In diesem Fall ist in dem Grundkörper 111 an der der Ausnehmung 5 entgegengesetzten Seite eine Bohrung 26 vorgesehen. Die Bohrung 26 hat ein Innengewinde 25 und ein Gewindestift 22 mit einem Außengewinde 24 ist in der Bohrung 26 eingeschraubt. Auch in diesem Ausführungsbeispiel ist im Inneren der Ausnehmung 5 ein Sechskant 20 ausgebildet, der außerdem die Radialstufe 14 bildet. In diesem Fall ist eine Bohrung 33 in der Form 2 abgestuft ausgebildet, wobei der untere Bereich einen Durchmesser und ein Gewinde 34 hat (siehe Fig. 7), die zum Gewindestift 22 passen und der obere Bereich einen Durchmesser hat der zum Durchmesser des Grundkörpers passt und ebenso wie der Grundkörper glatt ausgebildet ist. Wie schon beim ersten Ausführungsbeispiel kann der Grundkörper 111 mit Hilfe eines Sechskantschlüssels von der Forminnenseite her in die Form 2 eingeschraubt werden, und anschließend können die Feder 18 und der Einsatz 7 ebenfalls von der Forminnenseite her in den Grundkörper 111 montiert werden. Somit ist auch gemäß diesem Ausführungsbeispiel eine Zugänglichkeit von der Formaußenseite her nicht notwendig.

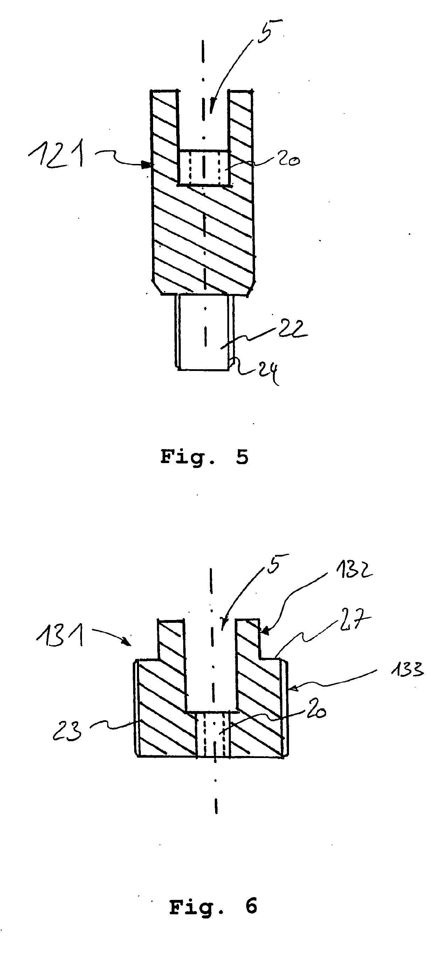

Fig. 5 zeigt ein drittes Ausführungsbeispiel des Grundkörpers 121 das sich von dem zweiten Ausführungsbeispiel lediglich darin unterscheidet, dass der Gewindestift 22 mit dem Grundkörper 121 einstückig ausgebildet ist. Beispielsweise kann der Gewindestift angeschweißt sein oder mit dem Grundkörper zusammen aus einem einzigen Rohrling gefertigt sein.

Fig. 6 zeigt ein viertes Ausführungsbeispiel des Grundkörpers 131. Demgemäß weist der Grundkörper 131 einen großdurchmessrigen Abschnitte 133 und einen kleindurchmessrigen Abschnitt 132 auf, zwischen denen ein Anschlag 27 ausgebildet ist. Zusätzlich ist der großdurchmessrigen Abschnitt mit einem Außengewindeabschnitt 23 versehen. Wie schon in den vorstehenden Ausführungsbeispielen ist im Inneren der Ausnehmung 5 ein Sechskant 20 angeordnet, der jedoch zu der unteren Seite aus Fig. 6 geöffnet ist, so dass ein Sechskantschlüssel von unten her eingeführt werden kann.

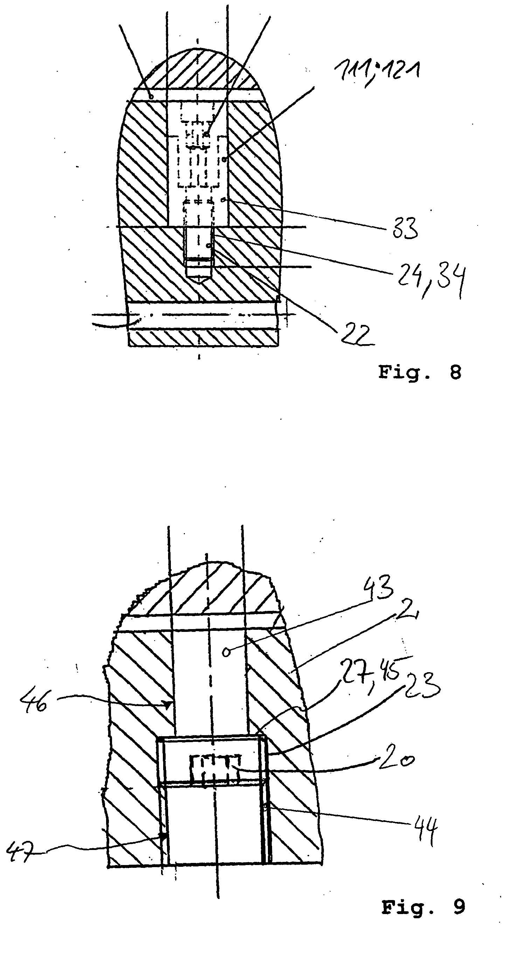

Fig. 8 zeigt einen Ausschnitt der Form 2 im Bereich in dem der Kennzeichnungsstempel gemäß dem vierten Ausführungsbeispiel moniert wird. Hier ist eine Montagebohrung 43 vorgesehen, die die Form 2 von der Formaußenseite zur Forminnenseite durchdringt. Die Montagebohrung 43 hat einen großdurchmessrigen Abschnitt 47, der sich zur Formaußenseite öffnen, und einen kleindurchmessrigen Abschnitt 46, der sich zur Forminnenseite öffnet. Im großdurchmessrigen Abschnitt 47 ist ein Innengewinde 44 ausgebildet, das zum Außengewinde 23 des Grundkörpers 131 passt. Zwischen den beiden Abschnitten 46, 47 ergibt sich aufgrund der unterschiedlichen Durchmesser ein Anschlag 45 in der Bohrung 43.

Für die Montage des Kennzeichnungsstempels mit dem Grundkörper 131 wird, anders als bei den vorgehergehenden Ausführungsbeispielen, zunächst die Feder 18 und der Einsatz 7 in der Ausnehmung 5 montiert. Im weiteren Verlauf wird dann der zusammengesetzte Stempel von der Formaußenseite her mit Hilfe eines Sechskantschlüssels in die Bohrung 43 eingeschraubt. Dabei kommt der Anschlag 27 des Grundkörpers 131 mit dem Anschlag 45 der Bohrung 43 in Kontakt und der Grundkörper kann gegen diesen Anschlag festgezogen werden. Somit kann durch Abstimmen der Längen der kleindurchmessrigen Abschnitte 46, 132 die aus der Ringfläche 6 und dem Einsatz 7 bestehende Stempelfläche an bündig an der Innensite der Form 2 ausgerichtet werden.

Bei der Montage eines Kennzeichnungsstempels mit dem Grundkörper 131 gemäß dem vierten Ausführungsbeispiel ist somit lediglich eine Zugänglichkeit der Form 2 von ihrer Außenseite her nötig.

Die Erfindung wurde vorstehend mit Bezug auf Ausführungsbeispiele beschrieben. Sie ist jedoch nicht als darauf begrenzt zu betrachten sondern kann auf unterschiedliche Arten von den beschrieben Ausführungsbeispielen abweichen ohne aus dem Bereich der in den Schutzansprüchen wiedergegebenen Erfindung zu fallen.

So kann alternativ zum Sechskants 20 eine beliebige andere Gestaltung zur Werkzeugaufnahme zum Einsatz kommen. Beispielsweise kann ein Schlitz oder ein Kreuzschlitz zur Aufnahme eines Schraubendrehers anstelle des Sechskants 20 in der Ausnehmung 5 vorgesehen sein.

Außerdem kann das Außengewinde 23 aus dem vierten Ausführungsbeispiel auch am kleindurchmessrigen Abschnitt 132 des Grundkörpers 131 und dementsprechend ein Innengewinde am kleindurchmessrigen Abschnitt 46 der Bohrung 43 ausgebildet sein.

## Patentansprüche

1. Kennzeichnungsstempel, der in eine Form (2) zur Metall- oder Kunststoffverarbeitung einsetzbar ist, mit einem Grundkörper (1; 101; 111; 121; 131) zur Aufnahme eines Einsatzes (7) in einer Ausnehmung (5) des Grundkörpers (1; 101; 111; 121; 131), wobei eine stirnseitige Fläche (6) des Grundkörpers (1; 101; 111; 121; 131) zusammen mit einer stirnseitigen Fläche des Einsatzes (7) eine durch gegenseitiges Verdrehen der beiden stirnseitigen Flächen verstellbare Stempelfläche bilden, **dadurch gekennzeichnet, dass** der Grundkörper (1; 101; 111; 121; 131) über einen Außengewindeabschnitt (21; 23; 24) verfügt, über den der Grundkörper (1; 101; 111; 121; 131) in einen Innengewindeabschnitt der Form (2) einschraubbar ist.

2. Kennzeichnungsstempel gemäß Anspruch 1, wobei sich der Außengewindeabschnitt (21; 23) direkt an dem Grundkörper (1; 101) befindet.

3. Kennzeichnungsstempel gemäß Anspruch 1, wobei sich der Außengewindeabschnitt (24) an einem mit dem Grundkörper (111; 121) verbundenen Gewindebolzen (22) befindet.

4. Kennzeichnungsstempel gemäß Anspruch 3, wobei der Gewindebolzen (22) in eine Bohrung des Grundkörpers (111) eingeschraubt ist.

5. Kennzeichnungsstempel gemäß Anspruch 4, wobei der Gewindebolzen (22) mit dem Grundkörper (121) zusammen aus einem Rohling gefertigt ist.

6. Kennzeichnungsstempel gemäß Anspruch 1 oder 2, wobei der Grundkörper (131) zwei Abschnitte (132, 132) mit unterschiedlichen Durchmessern hat, so dass im Bereich zwischen diesen Abschnitten (132, 133) ein sich radial erstreckender Anschlag (27) ausgebildet ist.

7. Kennzeichnungsstempel gemäß Anspruch 6, wobei der Außengewindeabschnitt (23) an dem Abschnitt (133) des Grundkörpers (131) mit größeren Durchmesser ausgebildet ist.

8. Kennzeichnungsstempel gemäß Anspruch 6, wobei der Außengewindeabschnitt (23) an dem Abschnitt (132) des Grundkörpers (131) mit kleinerem Durchmesser ausgebildet ist.

9. Kennzeichnungsstempel gemäß einem der vorstehenden Ansprüche, wobei in der Ausnehmung (5) des Grundkörpers (1; 101; 111; 121; 131) ein Aufnahmebereich (20) zur Aufnahme eines Drehwerkzeugs vorgesehen ist.

10. Kennzeichnungsstempel gemäß Anspruch 9, wobei sich der Aufnahmebereich (20) axial erstreckt.

11. Kennzeichnungsstempel gemäß einem der Ansprüche 9 oder 10, wobei der Aufnahmebereich (20) ein Sechskantbereich zur Aufnahme eines Sechskantschlüssels ist.

12. Kennzeichnungsstempel gemäß einem der Ansprüche 9 oder 10, wobei der Aufnahmebereich (20) ein Schlitz oder Kreuzschlitz zur Aufnahme eines Schraubendrehers ist.
